# EUROPEAN PATENT SPECIFICATION

(11) **EP 1 628 416 B1**
(45) Date of publication and mention of the grant of the patent: **23.01.2008**
(21) Application number: 05016349.2
(22) Date of filing: 27.07.2005
(51) Int. Cl.: H04B 10/10, G06F 1/32, G08C 23/04

(54) **Method and system for reducing power consumption of IRDA enabled handsets by turning on/off an IRDA port dynamically**
Verfahren und Vorrichtung für das Verringern der Leistungsaufnahme von IRDA ermöglichten Handsets, indem ein IRDA Port dynamisch ein- und ausgeschaltet wird
Méthode et système pour réduire la consommation de puissance d'un combiné IRDA en mise en marche un port IRDA dynamiquement

(30) Priority: 16.08.2004 US 602057 P; 26.08.2004 US 926621
(43) Date of publication of application: 22.02.2006
(73) Proprietor: Broadcom Corporation, Irvine, CA 92617 (US)
(72) Inventor: Li, Weidong, 95014 Cupertino (US)
(74) Representative: Jehle, Volker Armin

(56) References cited:
- EP-A- 0 772 307
- EP-A- 1 089 466
- EP-A- 1 408 630
- WO-A-00/10270

## Description

### FIELD OF THE INVENTION

Certain embodiments of the invention relate to IrDA enabled handsets. More specifically, certain embodiments of the invention relate to a method and system for reducing power consumption of IrDA enabled handsets by turning ON/OFF an IrDA port dynamically.

### BACKGROUND OF THE INVENTION

Infrared Data Association (IrDA) is a standard, which specifies a way to wirelessly transfer data via infrared radiation. The IrDA specifications include standards for both physical devices and the protocols they use to communicate with each other.

An Infra-red remote control unit may be utilized to control many common consumer electronic products such as, PDA's, TV's and DVD players. When a button, for example, is pressed on the remote control unit, a signal is sent from the remote control unit to the device that contains an infra-red receiver. This signal is encoded and transmitted using a modulated carrier wave in the frequency range of 30 kHz - 56 kHz, which is designated for IrDA usage. Most devices that have IrDA capability are mobile devices such as laptops, PDA's and cell phones, for example. These devices are designed to conserve battery life by switching to a sleep mode when the device is not active. In this regard, one or more processors within a particular device is configured to enter sleep mode, or some power saving mode when the device detects a period of inactivity. For example, the sleep mode automatically turns off a device after it has been unused for a predetermined period of time so as to conserve battery life. When a device is in sleep mode and data is sent to the device, the device takes a while before it wakes up and enters an operational state where it can process the received data. As a result, the device misses some of the initial characters because of the inherent delay in waking up. Even though some systems may minimize the wakeup time, characters will still be lost.

One current solution to the problem involves manually enabling or disabling the infra-red function on the handheld device or portable system by navigating through its menus. The IrDA port may be configured so that when the IrDA port is enabled, the device remains permanently active and never goes to a sleep mode, thereby increasing the power consumption. On the other hand, by disabling the infra-red port, the device goes to a sleep mode during prolonged periods of inactivity, thus causing valuable information that is sent through the infra-red port to be lost.

EP-A-1 089 466 discloses a method of maintaining an infra-red data link between terminals, wherein establishment of the infra-red data link is indicated by the first terminal sending a data request signal and, responsive thereto, receiving a data acknowledgement signal from the second terminal within a predetermined time period. If the data acknowledgement signal is not received within the predetermined time frame the first terminal sends a request to re-establish the data link. Responsive to an acknowledgement to the request to re-establish the data link from the second terminal, the first terminal may send a data request signal.

EP-A-0 772 307 is directed to handle collision of messages sent on an infrared communication link. D2 discloses a method and apparatus for the arrangement of an infrared communication link between a first device and a second device, wherein said first device comprises a first infra-red transmission means and a first infra-red reception means and said second device comprises a second infra-red transmission means and a second infra-red reception means. After a collision, in which collision said first and second transmission means transmit simultaneously, said first device after the elapse of a pre-determined first time interval re-transmits its message which was involved in said collision and said second device after the elapse of a pre-determined second time interval re-transmits its message which was involved in said collision, and said first and second time intervals are of different lengths.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Certain embodiments of the invention provide a method and system for reducing power consumption of IrDA enabled devices such as handsets by turning ON/OFF an IrDA port dynamically. Aspects of the method may comprise receiving a first signal indicating that IrDA data is received. In response to receiving the first signal a second signal may be generated which causes a processor to wakeup from a low power state. The processor may receive and process IrDA data when it wakes up from the low power state. The second signal may be an interrupt signal.

A connection request may be received by the processor and an IrDA connection may be established between the processor and the IrDA enabled device, when the latter receives a response from the processor. The connection request may be a serial infra red (SIR) connect request and the processor may generate a SIR connect response in response to the connection request. It may be determined whether a SIR connect response sent by the processor is received by the IrDA enabled device. The IrDA connection may be established between the IrDA enabled device and the processor when it is determined that the SIR connect response is received.

The processor may wait for the IrDA enabled device to stop transmitting the IrDA data and a first counter may be started when the IrDA enabled device stops transmitting the IrDA data. It may be determined whether the IrDA data is being received by the processor. The first counter may be reset if the processor receives the IrDA data from the IrDA enabled device. It may be determined whether the first counter has reached a threshold value, and if so, the processor may be enabled to enter a power saving mode.

A second counter may be incremented if the IrDA enabled device doesn't receive a SIR connect response from the processor in response to a SIR connect request from the IrDA enabled device to establish a connection between the IrDA enabled device and the processor. It may also be determined whether the second counter has reached a maximum count value. The IrDA enabled device may send another SIR connect request to the processor if it is determined that the maximum count value has not been reached. If the maximum count value has been reached, the IrDA enabled device may generate a TIME OUT message indicating the inability of the IrDA enabled device to communicate with the processor.

Another embodiment of the invention may provide a machine-readable storage, having stored thereon, a computer program having at least one code section for reducing power consumption of IrDA enabled devices. The at least one code section may be executable by a machine, thereby causing the machine to perform the steps as described above for reducing power consumption of IrDA enabled devices by turning ON/OFF an IrDA port dynamically.

In accordance with another embodiment of the invention, a system for reducing power consumption of IrDA enabled devices may be provided. In this regard, the system may comprise circuitry that receives a first signal indicating received IrDA data. In response to receiving the first signal, the circuitry may generate an interrupt signal that causes a processor to wake up from a low power state. The processor may receive and process the IrDA data when it wakes up from the low power state.

The system may comprise circuitry that receives a connection request by the processor to establish a connection between the processor and the IrDA enabled device. The connection request may be a serial infra red (SIR) connect request and the system may comprise circuitry that generates a SIR connect response in response to the connection request. The system may comprise circuitry that determines whether a SIR connect response has been received by the IrDA enabled device. If the SIR connect response is received, the system may comprise circuitry that establishes the IrDA connection between the IrDA enabled device and the processor.

The system may comprise circuitry that waits for the IrDA enabled device to stop transmitting the IrDA data and starts a first counter when the IrDA enabled device stops transmitting the IrDA data. Circuitry may be utilized to determine whether the IrDA data is being received by the processor and the first counter may be reset if the processor receives the IrDA data from the IrDA enabled device. The system may further comprise circuitry that determines whether the first counter has reached a threshold value and enables the processor to enter a power saving mode when the first counter reaches a threshold value.

In another aspect of the invention, the system may comprise circuitry that increments a second counter if the IrDA enabled device doesn't receive a SIR connect response from the processor in response to a SIR connect request to establish a connection between the IrDA enabled device and the processor. The system may further comprise circuitry that determines whether the second counter has reached a maximum count value. If the maximum count value has been reached, the IrDA enabled device may comprise circuitry that may generate a TIME OUT message indicating the inability of the IrDA enabled device to communicate with the processor. Circuitry may be utilized to send another SIR connect request to the processor if the maximum count value has not been reached.

According to an aspect of the invention, a method for reducing power consumption of IrDA enabled devices is provided, the method comprising:
receiving a first signal indicating received IrDA data; and
generating a second signal in response to receiving said first signal, that causes a processor to wakeup from a low power state.

Advantageously, the method further comprises receiving said IrDA data by said processor when said processor wakes up from said low power state.

Advantageously, the method further comprises processing said IrDA data by said processor when said processor wakes up from said low power state.

Advantageously, said second signal is an interrupt signal.

The method further comprises:
receiving a connection request; and
establishing an IrDA connection between said processor and the IrDA enabled device.

Advantageously, said connection request is a serial infra red (SIR) connect request.

The method further comprises generating a SIR connect response in response to said connection request;
determining whether said SIR connect response is received;
establishing an IrDA connection if said SIR connect response is received ;
waiting for said IrDA data to stop;
starting a first counter;
determining whether said IrDA data is received;
resetting said first counter if said IrDA data is received;
determining whether said first counter has reached a threshold value;
enabling said processor to enter a power saving mode if said first counter has reached said threshold value.

Advantageously, the method further comprises incrementing a second counter if said SIR connect response is not received;
determining whether a maximum count value is reached for said second counter
generating a timeout if said maximum count value is reached
sending another SIR connect request if said maximum count value is not reached.

According to an aspect of the invention, a system for reducing power consumption of IrDA enabled devices is provided, the system comprising:
circuitry that is adapted to receive a first signal indicating received IrDA data; and
circuitry that is adapted to generate a second signal in response to receiving said first signal, said second signal causes a processor to wakeup from a low power state.

Advantageously, the system further comprises circuitry that is adapted to cause said IrDA data to be received by said processor when said processor wakes up from said low power state.

Advantageously, said processor is adapted to process said IrDA data when said processor wakes up from said low power state.

Advantageously, said second signal is an interrupt signal.

The system further comprises:
circuitry that is adapted to receive a connection request; and
circuitry that is adapted to establish an IrDA connection between said processor and the IrDA enabled device.

Advantageously, said connection request is a serial infra red (SIR) connect request.

The system further comprises circuitry that is adapted to generate a SIR connect response in response to said connection request.

Advantageously, the system further comprises circuitry that is adapted to determine whether said SIR connect response is received.

Advantageously, the system further comprises circuitry that is adapted to establish an IRDA connection if said SIR connect response is received.

Advantageously, the system further comprises circuitry that is adapted to wait for said IrDA data to stop.

The system further comprises circuitry that is adapted to start a first counter;
circuitry that is adapted to determine whether said IrDA data is received;
circuitry that is adapted to reset said first counter if said IrDA data is received.
circuitry that is adapted to determine whether said first counter has reached a threshold value;
circuitry that is adapted to enable said processor to enter a power saving mode if said first counter has reached said threshold value.

Advantageously, the system further comprises circuitry that is adapted to increment a second counter if said SIR connect response is not received
circuitry that is adapted to determine whether a maximum count value is reached for said second counter
circuitry that is adapted to generate a timeout if said maximum count value is reached.
circuitry that is adapted to send another SIR connect request if said maximum count value is not reached.

According to an aspect of the invention, a machine-readable storage is provided having stored thereon, a computer program having at least one code section for reducing power consumption of IrDA enabled devices, the at least one code section being executable by a machine for causing the machine to perform steps comprising:
receiving a first signal indicating received IrDA data; and
generating a second signal in response to receiving said first signal, that causes a processor to wakeup from a low power state.

Advantageously, the machine-readable storage further comprises code for receiving said IrDA data by said processor when said processor wakes up from said low power state.

Advantageously, the machine-readable storage further comprises code for processing said IrDA data by said processor when said processor wakes up from said low power state.

Advantageously, said second signal is an interrupt signal.

The machine-readable storage further comprises:
code for receiving a connection request; and
code for establishing an IrDA connection between said processor and the IrDA enabled device.

Advantageously, said connection request is a serial infra red (SIR) connect request.

The machine-readable storage further comprises code for generating a SIR connect response in response to said connection request;
code for determining whether said SIR connect response is received;
code for establishing an IrDA connection if said SIR connect response is received;
code for waiting for said IrDA data to stop;
code for starting a first counter;
code for determining whether said IrDA data is received ;
code for resetting said first counter if said IrDA data is received;
code for determining whether said first counter has reached a threshold value ;
code for enabling said processor to enter a power saving mode if said first counter has reached said threshold value.

Advantageously, the machine-readable storage further comprises code for incrementing a second counter if said SIR connect response is not received.

Advantageously, the machine-readable storage further comprises code for determining whether a maximum count value is reached for said second counter.

Advantageously, the machine-readable storage further comprises code for generating a timeout if said maximum count value is reached.

Advantageously, the machine-readable storage further comprises code for sending another SIR connect request if said maximum count value is not reached.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram of an exemplary system for reducing power consumption of IrDA enabled handsets by turning ON/OFF an IrDA port dynamically in accordance with an embodiment of the invention.

FIG. 2 is a timing diagram illustrating the exchange of messages that may be utilized in connection with the method and system for reducing power consumption of IrDA enabled handsets by turning ON/OFF an IrDA port dynamically in accordance with an embodiment of the invention.

FIG. 3 is a flowchart illustrating exemplary steps for reducing power consumption of IrDA enabled handsets by turning ON/OFF an IrDA port dynamically in accordance with an embodiment of the invention.

FIG. 4 is a flowchart illustrating exemplary steps that may be utilized for reducing power consumption of IrDA enabled handsets by turning ON/OFF an IrDA port dynamically in accordance with an embodiment of the invention.

### DETAILED DESCRIPTION OF THE INVENTION

Certain embodiments of the invention may be found in a method and system for reducing power consumption of IrDA enabled handsets by turning ON/OFF an IrDA port dynamically. In one aspect of the invention, IrDA enabled devices are designed to conserve battery life by switching to a sleep mode when they are not active. When the device receives data it triggers an interrupt controller, which sends an interrupt signal to the processor and wakes up the entire device. The wakeup process may take, for example, about 8 ms, while it may take, for example, about 6-8 seconds to establish an IrDA connection. Accordingly, this gives the processor enough time to wakeup and receive data, without loss of any valuable information.

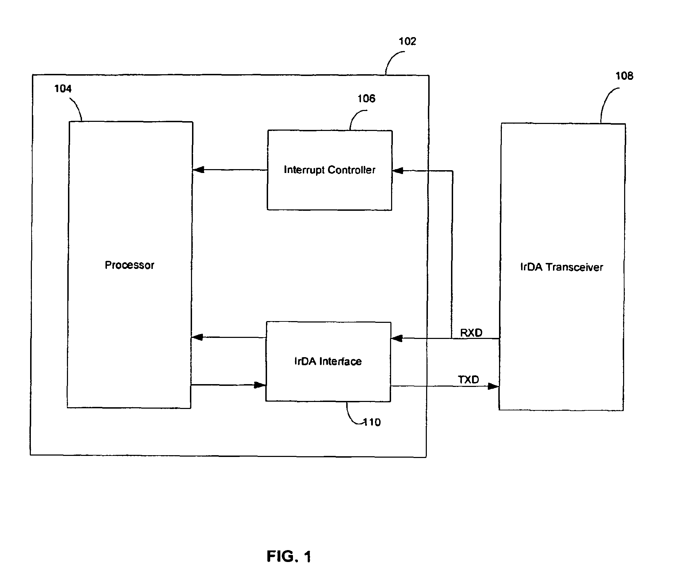

FIG. 1 is a block diagram of an exemplary system for reducing power consumption of IrDA enabled handsets by turning ON/OFF an IrDA port dynamically in accordance with an embodiment of the invention. Referring to FIG. 1, the chip 102 comprises a processor 104, an interrupt controller 106, an IrDA transceiver 108 and an IrDA interface 110.

The chip 102 may be for example, a baseband processor chip that may be utilized in, for example, GSM/GPRS/EDGE compliant devices. The chip 102 may be adapted to offer a high level of system integration, performance, and features for next generation wireless multimedia handsets and data modules. For low power consumption, accelerators are extensively used for certain necessary compute-intensive functions. The chip 102 may comprise analog and digital GSM/GPRS/EDGE baseband processing functions on a single CMOS chip, for example.

The processor 104 may be an ARM processor, for example or other suitable type of processor and is a fully synthesizable 32-bit RISC processor which monitors the activity at the IrDA port to check if any data is being received. The IrDA interface 110 may be utilized to establish an infra-red connection between the processor 104 and an IrDA transceiver 108. The IrDA transceiver 108 has an input port to receive the transmitted data TXD from the chip 102 and an output port to send the received data RXD back to the chip 102 and the interrupt controller 106. The system goes to a power saving mode such as a deep sleep mode during prolonged periods of inactivity. When the system is in a power saving mode, it may receive data RXD from the IrDA transceiver. An interrupt signal may be generated by the interrupt controller 106 in response to receiving the data RXD from the IrDA transceiver 108. The interrupt signal may cause the processor 104 to wake up from a low power state. The processor may receive and process the data when it wakes up from the low power state without losing any valuable information.

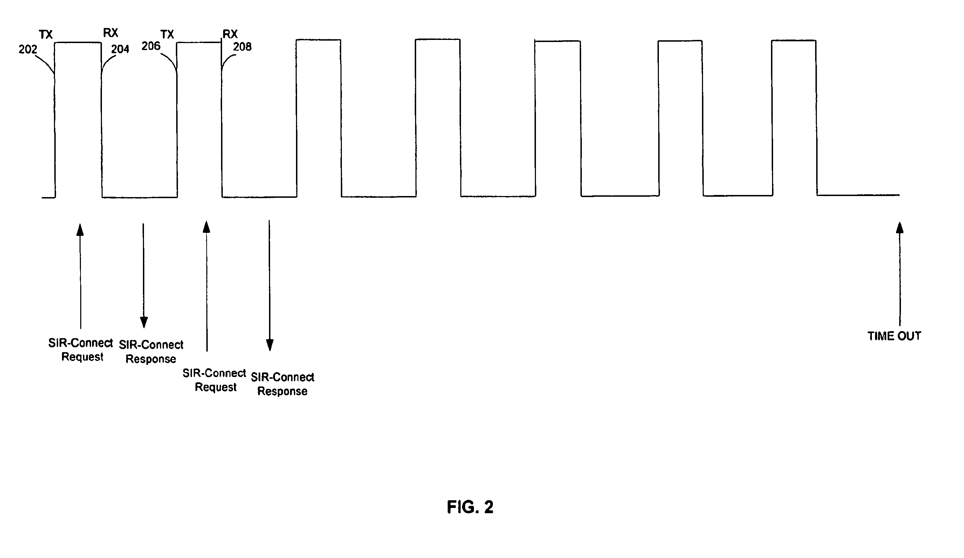

FIG. 2 is a timing diagram illustrating the exchange of messages that may be utilized in connection with the method and system for reducing power consumption of IrDA enabled handsets by turning ON/OFF an IrDA port dynamically in accordance with an embodiment of the invention. Referring to FIG. 2, on the rising edge 202, the signal is transmitted (Tx) to the IrDA transceiver and a signal is received on the falling edge 204 (Rx). Serial infra red (SIR) is basically the RS232 protocol, but with other signal levels and impulse lengths.

When the infra-red device wants to establish an IrDA connection with the RF chip it sends out a SIR-connect request and waits for a SIR-connect response. The IrDA connection is established when the IrDA transceiver receives the SIR connect response. If the IrDA transceiver doesn't receive the SIR connect response within a short period of time, it sends out another request on the rising edge 206 and waits for the SIR connect response again on the next falling edge 208. The IrDA transceiver sends out requests around 6-8 times, for example and each request period takes around 1 s. The total request period may last 6-8 seconds while the processor may wake up in about 8 ms after it receives an interrupt signal from the interrupt controller. This gives the processor enough time to wake up and be ready to receive the data from the IrDA transceiver. If the IrDA transceiver doesn't get a response after 6-8 attempts, for example, it times out and a TIME OUT message may be generated to indicate its inability to communicate with the chip.

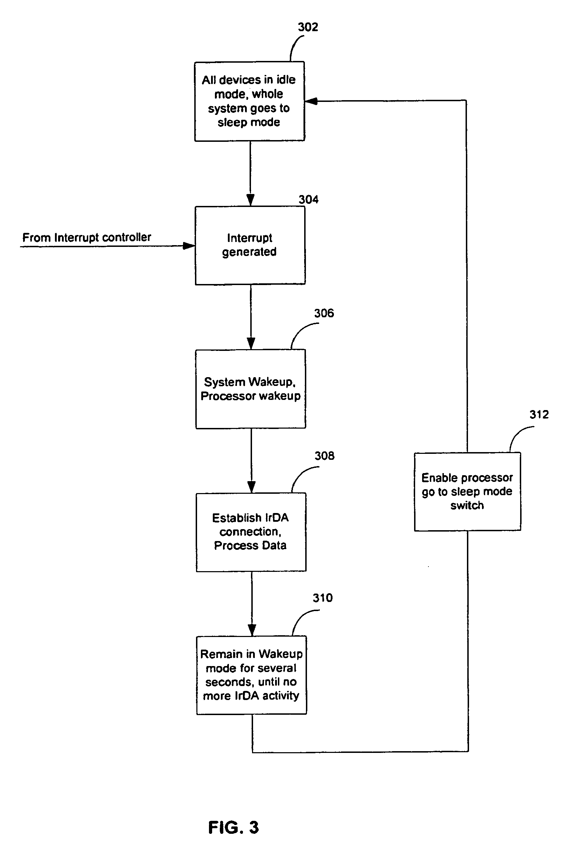

FIG. 3 is a flowchart illustrating exemplary steps for reducing power consumption of IrDA enabled handsets by turning ON/OFF an IrDA port dynamically in accordance with an embodiment of the invention. Referring to FIG. 3, in step 302, when the system remains idle for a prolonged period, the devices go to a power saving mode, such as a sleep mode to reduce power consumption. In step 304, when the chip receives data RXD from the IrDA transceiver, an interrupt signal may be generated by the interrupt controller in response to receiving the data RXD from the IrDA transceiver. In step 306, the interrupt signal wakes up the processor and the system. In step 308, the IrDA connection is then established and data is processed after the IrDA transceiver sends a SIR-connect request and receives a SIR-connect response from the processor. In step 310, the system remains in the wakeup mode for several seconds, after the IrDA activity has stopped. In step 312, the processor is enabled to switch the system back to sleep mode until it receives another interrupt signal.

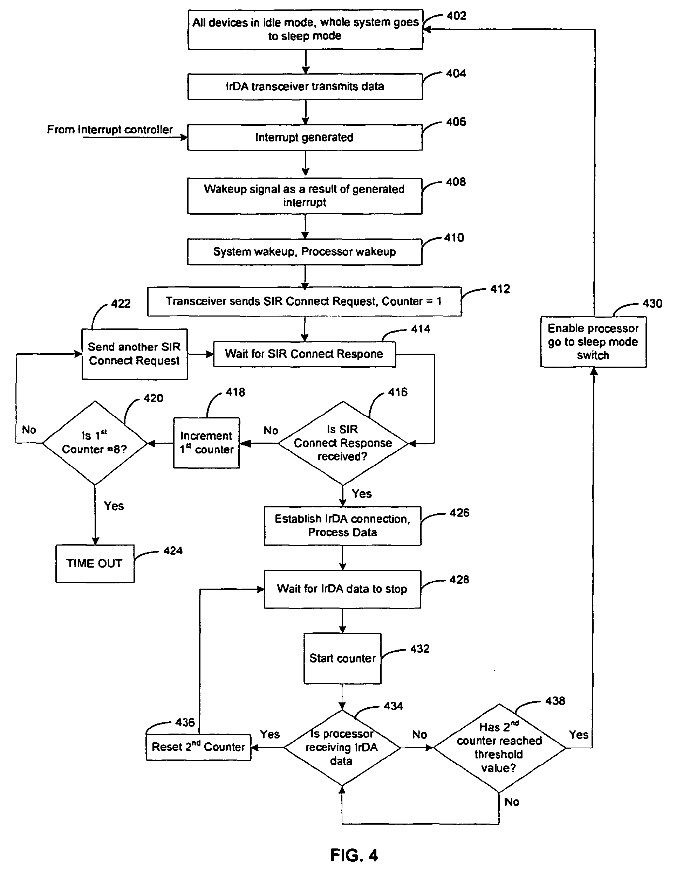

FIG. 4 is a flowchart illustrating exemplary steps that may be utilized for reducing power consumption of IrDA enabled devices by turning ON/OFF an IrDA port dynamically in accordance with an embodiment of the invention. Referring to FIG. 4, in step 402 all the devices are in idle mode when the system remains idle for a prolonged period, and the system enters a power saving mode, such as a deep sleep mode to reduce power consumption. In step 404, the IrDA transceiver transmits data to the chip. An interrupt signal may be generated by the interrupt controller, and in step 406, in response to receiving the data from the IrDA transceiver. In step 408, a wakeup signal is created as a result of the generated interrupt signal, which wakes up the system and the processor as shown in step 410.

In step 412, the IrDA transceiver sends a SIR connect request to the chip and increments the first counter to 1. In step 414 the IrDA transceiver waits for a SIR connect response from the chip. In step 416, the IrDA transceiver checks if a SIR connect response has been received from the chip. If no response has been received control passes to step 418, where the first counter is incremented. In step 420, the value of the first counter is checked and if it equals the maximum value of 8, for example, then control passes to step 424, wherein the IrDA transceiver generates a TIME OUT message indicating its inability to communicate with the chip.

If the first counter in step 420 is less than the maximum value of 8, for example, then control passes to step 422, where the IrDA transceiver sends out another SIR connect request to the chip. In step 414, there is a wait for a SIR connect response from the chip. In step 416, if a SIR connect response is received, control passes to step 426. This process continues until a SIR connect response has been received by the IrDA transceiver or the system reaches a TIME OUT. In step 426, an IrDA connection is established between the processor and the IrDA transceiver and data is processed in the chip. In step 428, the system remains in wakeup mode and waits for the IrDA data to stop. In step 432, a second counter is started when the processor stops receiving the IrDA data. The system checks if the processor is receiving any more IrDA data in step 434. If the processor is receiving any more IrDA data, it resets the second counter in step 436 and returns to step 428 to wait for the IrDA data to stop. If the processor is not receiving any more IrDA data, in step 438, the second counter is checked to determine if it has reached its threshold value. If the second counter has not reached its threshold value, control passes back to step 434 where it is determined whether the processor is receiving IrDA data. If the second counter has reached its threshold value, in step 430, the processor is enabled to switch the system back to its power saving mode until it receives another interrupt signal.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for reducing power consumption of IrDA enabled devices, the method comprising:
receiving a first signal indicating received IrDA data; and
generating a second signal in response to receiving said first signal, that causes a processor (104) to wakeup from a low power state;
receiving a connection request; and
establishing an IrDA connection between said processor (104) and the IrDA enabled device;
**characterized by**
generating a connect response in response to said connection request; starting a first counter;
determining whether said connect response is received; waiting for said IrDA data to stop;
determining whether said IrDA data is received;
resetting said first counter, if said IrDA data is received;
determining whether said first counter has reached a threshold value; and
enabling said processor to enter a power saving mode, if said first counter has reached said threshold value.

2. The method according to claim 1, further comprising
incrementing a second counter, if said connect response is not received;
determining whether a maximum count value is reached for said second counter;
generating a timeout, if said maximum count value is reached; and
sending another connect request, if said maximum count value is not reached.

3. The method according to claim 1 or 2, further comprising establishing an IrDA connection, if said connect response is received.

4. The method according to claim 1 or 2, wherein said connection request is a serial infra red connect request and said connect response is a serial infra red connect response.

5. The method according to claim 1, further comprising receiving said IrDA data by said processor (104) when said processor (104) wakes up from said low power state.

6. The method according to claim 1, further comprising processing said IrDA data by said processor (104) when said processor (104) wakes up from said low power state.

7. The method according to claim 1, wherein said second signal is an interrupt signal.

8. A system for reducing power consumption of IrDA enabled devices, the system comprising:
circuitry (106, 108, 110) adapted to receive a first signal indicating received IrDA data;
circuitry (106, 108, 110) adapted to generate a second signal in response to receiving said first signal, said second signal causes a processor (104) to wakeup from a low power state;
circuitry (106, 108, 110) adapted to receive a connection request; and
circuitry (106, 108, 110) adapted to establish an IrDA connection between said processor (104) and the IrDA enabled device
**characterized by**
circuitry (106, 108, 110) adapted to generate a connect response in response to said connection request;
circuitry (106, 108, 110) adapted to start a first counter;
adapted to determine whether said connect response is received;
adapted to wait for said IrDA data to stop;
adapted to determine, whether said IrDA data is received;
adapted to reset said first counter, if said IrDA data is received;
adapted to determine, whether said first counter has reached a threshold value; and
adapted to enable said processor (104) to enter a power saving mode, if said first counter has reached said threshold value.

9. The method according to claim 1, further comprising:
circuitry (106, 108, 110) adapted to increment a second counter, if said connect response is not received;
adapted to determine, whether a maximum count value is reached for said second counter;
adapted to generate a timeout, if said maximum count value is reached; and
adapted to send another connect request, if said maximum count value is not reached.

10. The system according to claim 8 or 9, further comprising circuitry (106, 108, 110) adapted to cause said IrDA data to be received by said processor (104) when said processor (104) wakes up from said low power state.

11. The system according to claim 8, wherein said processor (104) processes said IrDA data when said processor (104) wakes up from said low power state.

12. The system according to claim 8 or 9, further comprising establishing an IrDA connection, if said connect response is received.

13. The system according to claim 8 or 9, wherein said connection request is a serial infra red connect request and said connect response is a serial infra red connect response.

14. The system according to claim 8 or 9, wherein said second signal is an interrupt signal.

15. A machine-readable storage medium having stored thereon, a computer program having at least one code section for reducing power consumption of IrDA enabled devices, the at least one code section being executable by a machine for causing the machine to perform steps comprising:
receiving a first signal indicating received IrDA data; and
generating a second signal in response to receiving said first signal, that causes a processor (104) to wakeup from a low power state;
receiving a connection request;
establishing an IrDA connection between said processor (104) and the IrDA enabled device;
generating a connect response in response to said connection request;
starting a first counter;
determining whether said connect response is received;
waiting for said IrDA data to stop;
determining whether said IrDA data is received;
resetting said first counter, if said IrDA data is received;
determining whether said first counter has reached a threshold value; and
enabling said processor to enter a power saving mode, if said first counter has reached said threshold value.

16. The machine-readable storage medium according to claim 15, further comprising code for:
incrementing a second counter, if said connect response is not received;
determining whether a maximum count value is reached for said second counter;
generating a timeout, if said maximum count value is reached; and
sending another connect request, if said maximum count value is not reached.

17. The machine-readable storage medium according to claim 15, further comprising code for receiving said IrDA data by said processor (104) when said processor (104) wakes up from said low power state.

## Patentansprüche

1. Verfahren zum Verringern der Leistungsaufnahme von IrDA-befähigten Vorrichtungen, wobei das Verfahren umfasst:
Empfangen eines ersten Signals, das empfangene IrDA-Daten anzeigt; und
Erzeugen, im Ansprechen auf den Empfang des ersten Signals, eines zweiten Signals, das einen Prozessor (104) veranlasst, aus einem Zustand mit niedriger Leistung aufzuwachen;
Empfangen einer Verbindungsanforderung; und
Herstellen einer IrDA-Verbindung zwischen dem Prozessor (104) und der IrDA-befähigten Vorrichtung;
**gekennzeichnet durch**
Erzeugen einer Verbindungsantwort im Ansprechen auf die Verbindungsanforderung;
Starten eines ersten Zählers;
Bestimmen, ob die Verbindungsantwort empfangen wurde;
Warten auf das Ende der IrDA-Daten;
Bestimmen, ob die IrDA-Daten empfangen wurden;
Zurücksetzen des ersten Zählers, falls die IrDA-Daten empfangen wurden;
Bestimmen, ob der erste Zähler einen Schwellwert erreicht hat; und
Freigabe des Prozessors, in einen Energiesparmodus einzutreten, falls der erste Zähler den Schwellwert erreicht hat.

2. Verfahren nach Anspruch 1, welches ferner umfasst:
Inkrementieren eines zweiten Zählers, falls die Verbindungsantwort nicht empfangen wurde;
Bestimmen, ob ein maximaler Zählwert für den zweiten Zähler erreicht wurde;
Erzeugen eines Timeout, falls der maximale Zählwert erreicht wurde; und
Senden einer anderen Verbindungsanforderung, falls der maximale Zählwert nicht erreicht wurde.

3. Verfahren nach Anspruch 1 oder 2, welches ferner das Herstellen einer IrDA-Verbindung umfasst, falls die Verbindungsantwort empfangen wurde.

4. Verfahren nach Anspruch 1 oder 2, wobei die Verbindungsanforderung eine serielle Infrarot-Verbindungsanforderung ist, und die Verbindungsantwort eine serielle Infrarot-Verbindungsantwort ist.

5. Verfahren nach Anspruch 1, welches ferner ein Empfangen der IrDA-Daten durch den Prozessor (104) umfasst, wenn der Prozessor (104) aus dem Zustand mit niedriger Leistung aufwacht.

6. Verfahren nach Anspruch 1, welches ferner ein Verarbeiten der IrDA-Daten durch den Prozessor (104) umfasst, wenn der Prozessor (104) aus dem Zustand mit niedriger Leistung aufwacht.

7. Verfahren nach Anspruch 1, wobei das zweite Signal ein Interrupt-Signal ist.

8. System zum Verringern der Leistungsaufnahme von IrDA-befähigten Vorrichtungen, wobei das System aufweist:
eine Schaltungsanordnung (106, 108, 110), die dazu ausgelegt ist, ein erstes Signal zu empfangen, das empfangene IrDA-Daten anzeigt;
eine Schaltungsanordnung (106, 108, 110), die dazu ausgelegt ist, im Ansprechen auf den Empfang des ersten Signals ein zweites Signal zu erzeugen, wobei das zweite Signal einen Prozessor (104) veranlasst, aus einem Zustand mit niedriger Leistung aufzuwachen;
eine Schaltungsanordnung (106, 108, 110), die dazu ausgelegt ist, eine Verbindungsanforderung zu empfangen; und
eine Schaltungsanordnung (106, 108, 110), die dazu ausgelegt ist, eine IrDA-Verbindung zwischen dem Prozessor (104) und der IrDA-befähigten Vorrichtung herzustellen,
**gekennzeichnet durch**
eine Schaltungsanordnung (106, 108, 110), die dazu ausgelegt ist, im Ansprechen auf die Verbindungsanforderung eine Verbindungsantwort zu erzeugen;
eine Schaltungsanordnung (106, 108, 110), die dazu ausgelegt ist, einen ersten Zähler zu starten;
dazu ausgelegt ist, zu bestimmen, ob die Verbindungsantwort empfangen wurde;
dazu ausgelegt ist, auf das Ende der IrDA-Daten zu warten;
dazu ausgelegt ist, zu bestimmen, ob die IrDA-Daten empfangen wurden;
dazu ausgelegt ist, den ersten Zähler zurückzusetzen, falls die IrDA-Daten empfangen wurden;
dazu ausgelegt ist, zu bestimmen, ob der erste Zähler einen Schwellwert erreicht hat; und
dazu ausgelegt ist, den Prozessor (104) frei zu geben, in einen Energiesparmodus einzutreten, falls der erste Zähler den Schwellwert erreicht hat.

9. Verfahren nach Anspruch 1, welches ferner umfasst:
eine Schaltungsanordnung (106, 108, 110), die dazu ausgelegt ist, einen zweiten Zähler zu inkrementieren, falls die Verbindungsantwort nicht empfangen wurde;
dazu ausgelegt ist, zu bestimmen, ob ein maximaler Zählwert für den zweiten Zähler erreicht wurde;
dazu ausgelegt ist, ein Timeout zu erzeugen, falls der maximale Zählwert erreicht wurde; und
dazu ausgelegt ist, eine andere Verbindungsanforderung zu senden, falls der maximale Zählwert nicht erreicht wurde.

10. System nach Anspruch 8 oder 9, welches ferner eine Schaltungsanordnung (106, 108, 110) umfasst, die dazu ausgelegt ist, zu veranlassen, dass die IrDA-Daten durch den Prozessor (104) empfangen werden, wenn der Prozessor (104) aus dem Zustand mit niedriger Leistung aufwacht.

11. System nach Anspruch 8, wobei der Prozessor (104) die IrDA-Daten verarbeitet, wenn der Prozessor (104) aus dem Zustand mit niedriger Leistung aufwacht.

12. System nach Anspruch 8 oder 9, welches ferner das Herstellen einer IrDA-Verbindung umfasst, falls die Verbindungsantwort empfangen wurde.

13. System nach Anspruch 8 oder 9, wobei die Verbindungsanforderung eine serielle Infrarot-Verbindungsanforderung ist, und die Verbindungsantwort eine serielle Infrarot-Verbindungsantwort ist.

14. System nach Anspruch 8 oder 9, wobei das zweite Signal ein Interrupt-Signal ist.

15. Maschinenlesbares Speichermedium, auf dem ein Computerprogramm mit zumindest einem Codeabschnitt zum Verringern der Leistungsaufnahme von IrDA-befähigten Vorrichtungen gespeichert ist, wobei der zumindest eine Codeabschnitt von einer Maschine ausführbar ist, um die Maschine zur Durchführung von Schritten zu veranlassen, welche umfassen:
Empfangen eines ersten Signals, das empfangene IrDA-Daten anzeigt; und
Erzeugen, im Ansprechen auf den Empfang des ersten Signals, eines zweiten Signals, das einen Prozessor (104) veranlasst, aus einem Zustand mit niedriger Leistung aufzuwachen;
Empfangen einer Verbindungsanforderung;
Herstellen einer IrDA-Verbindung zwischen dem Prozessor (104) und der IrDA-befähigten Vorrichtung;
Erzeugen einer Verbindungsantwort im Ansprechen auf die Verbindungsanforderung;
Starten eines ersten Zählers;
Bestimmen, ob die Verbindungsantwort empfangen wurde;
Warten auf das Ende der IrDA-Daten;
Bestimmen, ob die IrDA-Daten empfangen wurden;
Zurücksetzen des ersten Zählers, falls die IrDA-Daten empfangen wurden;
Bestimmen, ob der erste Zähler einen Schwellwert erreicht hat; und
Freigeben des Prozessors, in einen Energiesparmodus einzutreten, falls der erste Zähler den Schwellwert erreicht hat.

16. Maschinenlesbares Speichermedium nach Anspruch 15, welches ferner Code umfasst zum:
Inkrementieren eines zweiten Zählers, falls die Verbindungsantwort nicht empfangen wurde;
Bestimmen, ob ein maximaler Zählwert für den zweiten Zähler erreicht wurde;
Erzeugen eines Timeout, falls der maximale Zählwert erreicht wurde; und
Senden einer anderen Verbindungsanforderung, falls der maximale Zählwert nicht erreicht wurde.

17. Maschinenlesbares Speichermedium nach Anspruch 15, welches ferner Code umfasst zum Empfangen der IrDA-Daten durch den Prozessor (104), wenn der Prozessor (104) aus dem Zustand mit niedriger Leistung aufwacht.

## Revendications

1. Procédé pour réduire la consommation d'énergie de dispositifs IrDA, le procédé comprenant les étapes suivantes :
réception d'un premier signal indiquant des données IrDA reçues ; et
génération d'un deuxième signal en réponse à la réception dudit premier signal, qui fait en sorte qu'un processeur (104) sorte d'un état de faible consommation ;
réception d'une demande de connexion ; et
établissement d'une connexion IrDA entre ledit processeur (104) et le dispositif IrDA ;
**caractérisé par** les étapes suivantes :
la génération d'une réponse de connexion en réponse à ladite demande de connexion ;
le démarrage d'un premier compteur ;
la détermination si ladite réponse de connexion est reçue ;
l'attente de l'arrêt desdites données IrDA ;
la détermination si lesdites données IrDA sont reçues ;
la réinitialisation dudit premier compteur, si lesdites données IrDA sont reçues ;
la détermination si ledit premier compteur a atteint une valeur de seuil ; et
l'activation dudit processeur pour qu'il entre dans un mode d'économie d'énergie, si ledit premier compteur a atteint ladite valeur de seuil.

2. Procédé selon la revendication 1, comprenant en outre les étapes suivantes :
incrémentation d'un deuxième compteur, si ladite réponse de connexion n'est pas reçue ;
détermination si une valeur de comptage maximale est atteinte pour ledit deuxième compteur ;
génération d'un signal d'expiration de délai, si ladite valeur de comptage maximale est atteinte ; et
envoi d'une autre demande de connexion, si ladite valeur de comptage maximale n'est pas atteinte.

3. Procédé selon la revendication 1 ou 2, comprenant en outre l'établissement d'une connexion IrDA si ladite réponse de connexion est reçue.

4. Procédé selon la revendication 1 ou 2, dans lequel ladite demande de connexion est une demande de connexion série infrarouge et ladite réponse de connexion est une réponse de connexion série infrarouge.

5. Procédé selon la revendication 1, comprenant en outre la réception desdites données IrDA par ledit processeur (104) lorsque ledit processeur (104) sort dudit état de faible consommation.

6. Procédé selon la revendication 1, comprenant en outre le traitement desdites données IrDA par ledit processeur (104) lorsque ledit processeur (104) sort dudit état de faible consommation.

7. Procédé selon la revendication 1, dans lequel ledit deuxième signal est un signal d'interruption.

8. Système pour réduire la consommation d'énergie de dispositifs IrDA, le système comprenant :
des circuits (106, 108, 110) adaptés pour recevoir un premier signal indiquant des données IrDA reçues ;
des circuits (106, 108, 110) adaptés pour générer un deuxième signal en réponse à la réception dudit premier signal, ledit deuxième signal fait en sorte qu'un processeur (104) sort d'un état de faible consommation ;
des circuits (106, 108, 110) adaptés pour recevoir une demande de connexion ; et
des circuits (106, 108, 110) adaptés pour établir une connexion IrDA entre ledit processeur (104) et le dispositif IrDA ;
**caractérisé par**
des circuits (106, 108, 110) adaptés pour générer une réponse de connexion en réponse à ladite demande de connexion ;
des circuits (106, 108, 110) adaptés pour démarrer un premier compteur ;
adaptés pour déterminer si ladite réponse de connexion est reçue ;
adaptés pour attendre l'arrêt desdites données IrDA ;
adaptés pour déterminer si lesdites données IrDA sont reçues ;
adaptés pour réinitialiser ledit premier compteur si lesdites données IrDA sont reçues ;
adaptés pour déterminer si ledit premier compteur a atteint une valeur de seuil ; et
adaptés pour activer ledit processeur (104) pour qu'il entre dans un mode d'économie d'énergie si ledit premier compteur a atteint ladite valeur de seuil.

9. Procédé selon la revendication 1, comprenant en outre :
des circuits (106, 108, 110) adaptés pour incrémenter un deuxième compteur, si ladite réponse de connexion n'est pas reçue ;
adaptés pour déterminer si une valeur de comptage maximale est atteinte pour ledit deuxième compteur ;
adaptés pour générer un signal d'expiration de délai si ladite valeur de comptage maximale est atteinte ; et
adaptés pour envoyer une autre demande de connexion si ladite valeur de comptage maximale n'est pas atteinte.

10. Système selon la revendication 8 ou 9, comprenant en outre des circuits (106, 108, 110) adaptés pour faire en sorte que lesdites données IrDA soient reçues par ledit processeur (104) lorsque ledit processeur (104) sort dudit état de faible consommation .

11. Système selon la revendication 8, dans lequel ledit processeur (104) traite lesdites données IrDA lorsque ledit processeur (104) sort dudit état de faible consommation.

12. Système selon la revendication 8 ou 9, comprenant en outre l'établissement d'une connexion IrDA si ladite réponse de connexion est reçue.

13. Système selon la revendication 8 ou 9, dans lequel ladite demande de connexion est une demande de connexion série infrarouge et ladite réponse de connexion est une réponse de connexion série infrarouge.

14. Système selon la revendication 8 ou 9, dans lequel ledit deuxième signal est un signal d'interruption.

15. Support de stockage lisible par une machine stockant un programme d'ordinateur ayant au moins une section de code pour réduire la consommation d'énergie de dispositifs IrDA, la au moins une section de code étant exécutable par une machine pour faire en sorte que la machine effectue des étapes comprenant :
la réception d'un premier signal indiquant des données IrDA reçues ; et
la génération d'un deuxième signal en réponse à la réception dudit premier signal, qui fait en sorte qu'un processeur (104) sort d'un état de faible consommation ;
la réception d'une demande de connexion ;
l'établissement d'une connexion IrDA entre ledit processeur (104) et le dispositif IrDA ;
la génération d'une réponse de connexion en réponse à ladite demande de connexion ;
le démarrage d'un premier compteur ;
la détermination si ladite réponse de connexion est reçue ;
l'attente de l'arrêt desdites données IrDA ;
la détermination si lesdites données IrDA sont reçues ;
la réinitialisation dudit premier compteur si lesdites données IrDA sont reçues ;
la détermination si ledit premier compteur a atteint une valeur de seuil ; et
l'activation dudit processeur pour qu'il entre dans un mode d'économie d'énergie, si ledit premier compteur a atteint ladite valeur de seuil.

16. Support de stockage lisible par une machine selon la revendication 15, comprenant en outre un code pour :
incrémenter un deuxième compteur si ladite réponse de connexion n'est pas reçue ;
déterminer si une valeur de comptage maximale est atteinte pour ledit deuxième compteur ;
générer un signal d'expiration de délai si ladite valeur de comptage maximale est atteinte ; et
envoyer une autre demande de connexion si ladite valeur de comptage maximale n'est pas atteinte.

17. Support de stockage lisible par une machine selon la revendication 15, comprenant en outre un code pour recevoir lesdites données IrDA par ledit processeur (104) lorsque ledit processeur (104) sort dudit état de faible consommation.
